# EUROPEAN PATENT SPECIFICATION

(11) **EP 4 493 880 B1**
(45) Date of publication and mention of the grant of the patent: **11.03.2026**
(21) Application number: 23722809.3
(22) Date of filing: 13.03.2023
(51) Int. Cl.: F28D 1/02, F28D 7/10, A01G 15/00, F24F 5/00, F28D 15/00, F28D 21/00

(54) **DEVICE FOR COOLING THE LOWER LAYERS OF THE ATMOSPHERE**
VORRICHTUNG ZUM KÜHLEN DER UNTEREN SCHICHTEN DER ATMOSPHÄRE
DISPOSITIF DE REFROIDISSEMENT DES COUCHES INFÉRIEURES DE L'ATMOSPHÈRE

(30) Priority: 16.03.2022 CZ 20220120
(43) Date of publication of application: 22.01.2025
(73) Proprietor: Vasa, Petr, 530 09 Pardubice (CZ); Burget, Jan, 530 02 Pardubice (CZ); Vavrousová, Dominika, 530 02 Pardubice (CZ)
(72) Inventor: KRETEK, Zdenek, 739 14 Ostravice (CZ)
(74) Representative: Musil, Dobroslav
(86) International application number: PCT/CZ2023/050012
(87) International publication number: WO 2023/174462

(56) References cited:
- WO-A1-2021/038008
- US-A- 5 295 625
- US-A1- 2008 258 013
- US-A1- 2009 152 370
- US-A1- 2018 238 624

## Description

### Technical field

The invention relates to a device for cooling the lower layers of the atmosphere which comprises a support tube sleeve filled with a buoyant carrier gas, wherein at least one air-conducting tube is arranged in parallel in the support tube sleeve, the lower end if the air-conducting tube is located in the lower layers of the atmosphere, especially near the Earth's surface, wherein the upper end of the air-conducting tube is located in the upper layers of the atmosphere, especially in the upper layers of the troposphere or in the stratosphere.

### Background art

Devices and processes for mitigating the global warming of the planet Earth are known from the background art, which comprise vertical ducts for the removal of warm air from the Earth's surface to the upper layers of the atmosphere. JP2015102291 discloses a pipe which carries warm air from the ground floor of a high-rise building to its roof, where it is discharged, warming the upper layers of the atmosphere, thereby increasing their radiation of heat to space and, due to the natural flow between the upper and lower layers of the atmosphere, cooling the air near the Earth's surface. Other known devices for mitigating the global warming move warm air from the Earth's surface even higher, above layers of the troposphere with high concentrations of greenhouse gases that prevent heat from radiating from the Earth's surface into space. WO2021038008A1 discloses a device which includes a chimney for removing warm air from the Earth's surface through the troposphere and the tropopause into the lower layers of the stratosphere. JPH1070941 describes a duct for removing warm air from the Earth's surface above clouds that otherwise prevent the heat of the Earth's surface from radiating into space. The disadvantage of these devices comprising a chimney, a pipe, a tube, etc., for removing warm air from the Earth's surface to the upper layers of the atmosphere is that they do not comprise suitable technical means for simultaneous and localized cooling of the lower layers of the atmosphere and rely only on the action of natural vertical flow, which can lead to unpredictable changes in the natural vertical flow of the Earth's atmosphere, to unexpected and unwanted cooling/warming of various parts of the Earth's surface, to undesirable atmospheric phenomena and lower efficiency of the device.

The object of the invention is therefore to eliminate or at least reduce the drawbacks of the background art by a device which will allow, either alone or as part of a system for mitigating the global warming, to effectively cool the lower layers of the atmosphere at a selected location.

### Summary of invention

The object of the invention is achieved by a device for cooling the lower layers of the atmosphere which comprises a support tube sleeve filled with a buoyant carrier gas, wherein at least one air-conducting tube is arranged in parallel in the support tube sleeve, wherein the lower end if the air-conducting tube is located in the lower layers of the atmosphere, especially near the Earth's surface, wherein the upper end of the air-conducting tube is located in the upper layers of the atmosphere, especially in the upper layers of the troposphere or in the stratosphere, wherein at least one air-returning tube is assigned to the air-conducting tube, the upper end of the air-returning tube being assigned to the upper end of the air-conducting tube, wherein the lower end of the air tube is spaced apart from the lower end of the air-conducting tube, and the support tube sleeve is provided with an interface for filling and discharging the buoyant carrier gas.

The device cools the lower layers of the atmosphere at a selected location by discharging cooled air which is removed from the lower layers of the atmosphere in another, distant, place, thus minimizing mixing of the removed air with the discharged cooled air and increasing the efficiency of the device operation. In addition, the device eliminates or at least reduces the leakage of cooled air into the upper layers of the atmosphere and the related pressure drop of the cooled air at the upper end of the air-returning tube, thereby further increasing the efficiency of the device operation.

Preferred embodiments of the device for cooling the lower layers of the atmosphere are the subject of dependent claims.

### Brief description of drawings

The invention is schematically represented in drawings, wherein Fig. 1 shows the device for cooling the lower layers of the atmosphere according to the invention, Fig. 2 shows the device in an embodiment with two air-returning tubes, Fig. 3 shows a schematic view of the device in an embodiment with four air-returning tubes, Fig. 3a shows a plan schematic view of the device in an embodiment with four air-returning tubes, Fig. 4 shows the device with an upper connecting part of the tubes, Fig. 5 shows the device with a common support tube sleeve and with tube extensions, Fig. 6 shows the device with a common support tube sleeve, with upper and lower connecting parts of the tubes and with tube extensions, Fig. 7 shows the device coupled to a stabilizing element and to a lower atmosphere cooling control system, Fig. 8 shows the device with a tube consisting of tube parts.

### Terminology used

"Air-conducting tube" throughout the application means a tube for conducting air from the lower layers of the atmosphere to the upper layers of the atmosphere.

"Air-returning tube" throughout the application means a tube for returning air from the upper layers of the atmosphere to the lower layers of the atmosphere.

### Examples of embodiment

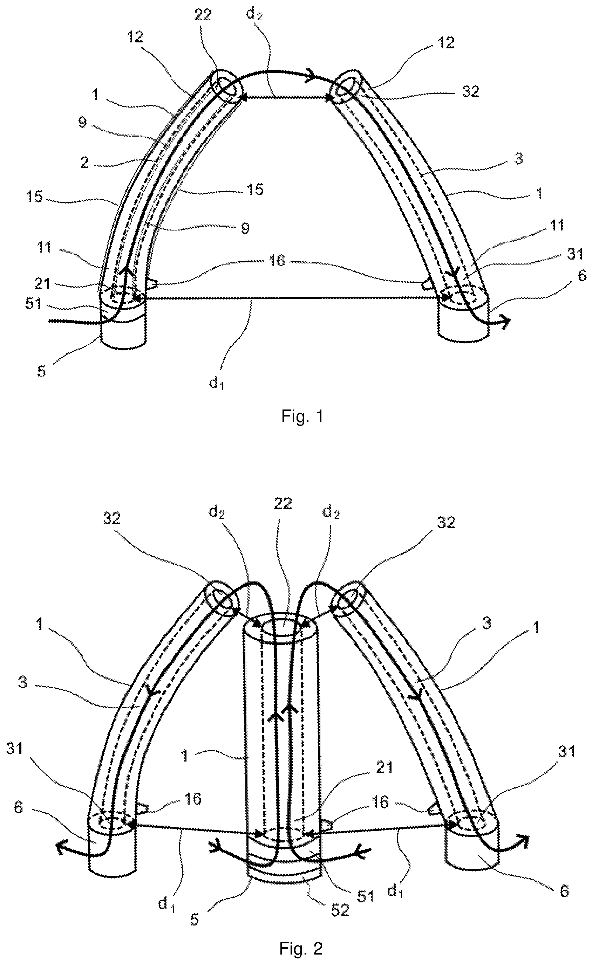

A device for cooling the lower layers of the atmosphere according to the present invention (Figs. 1 to 8) comprises a support tube sleeve 1 whose lower end 11 is situated in the lower layers of the atmosphere, especially near the Earth's surface, and the upper end 12 is situated in the upper layers of the atmosphere. The support tube sleeve 1 is filled with a buoyant carrier gas, in which is arranged, parallel with the support tube sleeve 1, at least one air-conducting tube 2, whose lower end 21 is situated in the lower layers of the atmosphere, especially near the Earth's surface, wherein the upper end 22 of the air-conducting tube 2 is situated in the upper layers of the atmosphere, especially in the upper layers of the troposphere or in the stratosphere, wherein at least one air-returning tube 3 is assigned to the air-conducting tube 2. The upper end 32 of the air-returning tube 3 is assigned to the upper end 22 of the air-conducting tube 2 at a distance d₂, which is equal to or less than the maximum distance that allows the intake of at least part, ideally all or substantially all, of the airflow from the upper end 22 of the air-conducting tube 2 into the upper end 32 of the air-returning tube 3. The lower end 31 of the air-returning tube 3 is horizontally and/or vertically spaced from the lower end 21 of the air-conducting tube 2 at a distance d₁ which is equal to or greater than the minimum distance that guarantees that the cooled air discharged from the lower end 31 of the air-returning tube 3 into the surrounding lower layer of the atmosphere is not sucked into the lower end 21 of the air-conducting tube 2.

The diameter of the air-returning and/or the air-conducting tube 3, 2 ranges from 0.5 m to 30 m, preferably from 1 m to 10 m, more preferably from 2 m to 5 m.

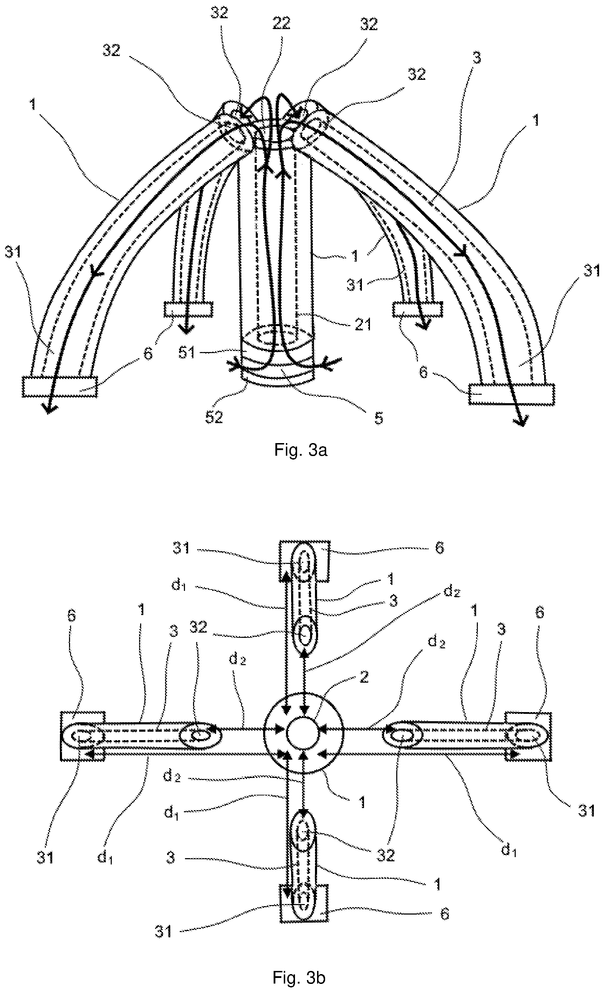

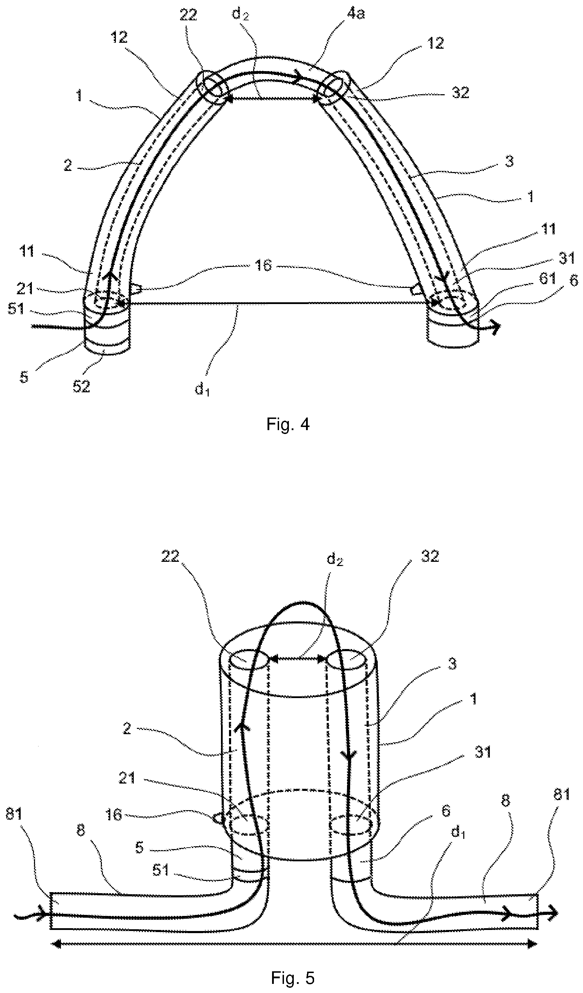

The upper end 32 of the air-returning tube 3 is assigned to the upper end 22 of the air-conducting tube 2, for example (Fig. 1) at a distance d₂ 20 m, but in another embodiment it may be assigned at a distance of 1 m to 200 m, as desired, e.g., according to weather conditions, the diameter of the tubes 2, 3, according to the number of the air-returning tubes 3 assigned to one air-conducting tube 2 (see Figs. 2, 3a and 3b), according to the connection of the upper ends 22, 32 of the tubes 2, 3 by an upper connecting part 4a (Figs. 4, 6, 7 and 8), etc.

The lower end 31 of the air-returning tube 3 is spaced apart from the lower end 21 of the air-conducting tube 2, for example (Fig. 1) at a distance d₁ 100 m, but in another embodiment may be spaced apart by 10 m to 1000 m, or substantially any other distance longer than 10 m, as required, e.g., according to weather conditions, the diameter of the tubes 2, 3, the number of the air-returning tubes 3 assigned to one air-conducting tube 2 (see Figs. 2, 3a and 3b), etc.

In the embodiment shown in Fig. 1, the device for cooling the lower layers of the atmosphere comprises, for example, a pair of support tube sleeves 1. In one support tube sleeve 1, an air-conducting tube 2 is arranged in parallel, in the other support tube sleeve 1, an air-returning tube 3 is arranged in parallel.

In another embodiment, the device comprises two (Fig. 2), three, four (Figs. 3a, 3b) or substantially any other number of air-returning tubes 3 assigned to one air conduct tube 2, for cooling several places in the lower layers of the atmosphere.

In the embodiment shown in Figs. 4, 6, 7 and 8, the upper end 22 of the air-conducting tube 2 is, for example, connected to the upper end 32 of the air-returning tube 3 by the upper connecting part 4a, e.g., a connecting tube, a connecting tube heat exchanger, a connecting chamber etc., which is adapted for cooling air by the size of its heat transfer surface and its flow area. The advantage of the device provided with the upper connecting part 4a is that all or substantially all of the air which during the operation of the device flows from the upper end 22 of the air-conducting tube 2, is sucked through the upper connecting part 4a into the upper end 32 of the air-returning tube 3, so that there are no leaks or substantially no leaks of the cooled air to the upper layers of the atmosphere, wherein the air is cooled when passing through the upper connecting part 4a. The upper end 32 of the air-returning tube 3 is, in the embodiment with the upper connecting part 4a, assigned to the upper end 22 of the air-conducting tube 2 at a distance d₂ which is adapted to the dimensions of the upper connecting part 4a.

The lower end 21 of the air-conducting tube 2 is, for example, assigned to a n air blowing device 5 for blowing air into the air-conducting tube 2, optionally provided with an air dehumidifier 51 and/or a dispenser 52 of a limiter 9 of frost formation in the cooled air. The air blowing device 5 blows air into the air-conducting tube 2 during operation of the device and thus promotes the flow of air from the lower layers of the atmosphere through the air-conducting tube 2 to the upper layers of the atmosphere (Figs. 1, 2, 3a and 5) or (in an embodiment with the upper connecting part 4a - Figs. 4, 6, 7 and 8) further through the upper connecting part 4a into the air-returning tube 3 and through the air-returning tube 3 back towards the Earth's surface to the lower layers of the atmosphere.

The lower end 31 of the air-returning tube 3 is exemplarily assigned to an air sucking device 6 for sucking air into the air-returning tube 3, which during operation of the device through the air-returning tube 3 sucks in the cooled air directly from the upper atmosphere (Figs. 1, 2, 3a, 3b, 5) or (in the embodiment with the upper connecting part 4a) from the upper connecting part 4a (Figs. 4, 6, 7and 8).

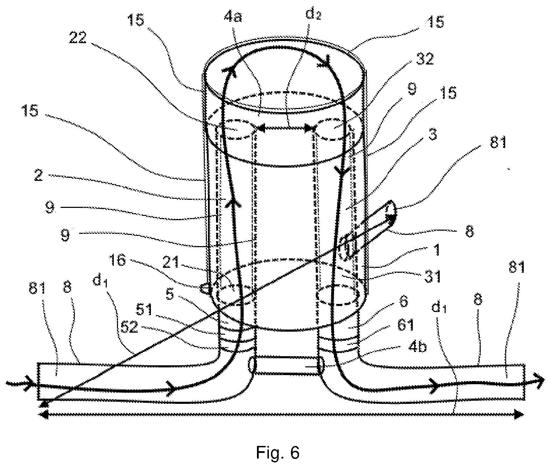

The air sucking device 6 is, in the embodiment with the upper connecting part 4a, optionally provided with a separator 61 of a limiter 9 of frost formation from the cooled air (Figs. 4 and 6), e.g., a dehumidifier for separating antifreeze liquid, a catalyst for separating gas, a filter for separating solid particles, an electrostatic separator for separating droplets or solid particles, etc.

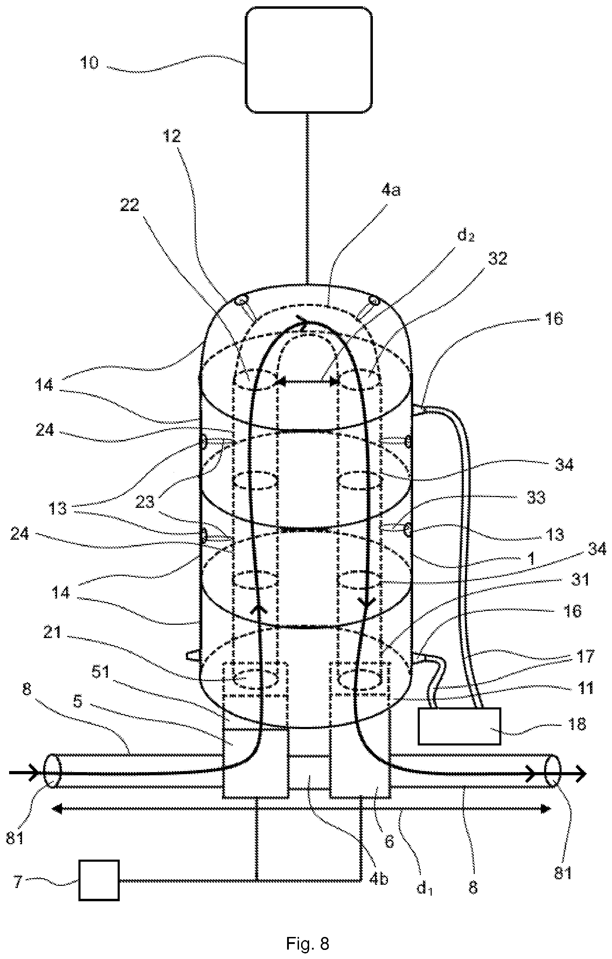

In the embodiment shown in Figs. 6 and 8, the lower ends 21, 31 of the air-conducting tube and the air-returning tube 2, 3 are connected by a closable lower connecting part 4b for temporarily creating a circuit with circulating dehumidified air and/or air containing a frost limiter 9 and/or a de-icing agent, to limit/remove frost deposits on the inner surface of the air-conducting tube and the air-returning tube 2, 3.

In the embodiment shown in Figs. 1, 2, 3a, 3b and 4, the air-conducting tube 2 and the air-returning tube 3 are, for example, each arranged in its own support tube sleeve 1.

In the embodiment illustrated in Figs. 5, 6, 7 and 8, for example, at least one air-conducting tube 2 and at least one air-returning tube 3 are arranged in parallel in a common support tube sleeve 1, wherein the upper ends 22, 32 of the air-conducting tube and the air-returning tube 2, 3 are optionally interconnected by the upper connecting part 4a (Figs. 6, 7 and 8).

In the embodiment shown in Fig. 6, for example, the upper connecting section 4a is arranged outside the support tube sleeve 1.

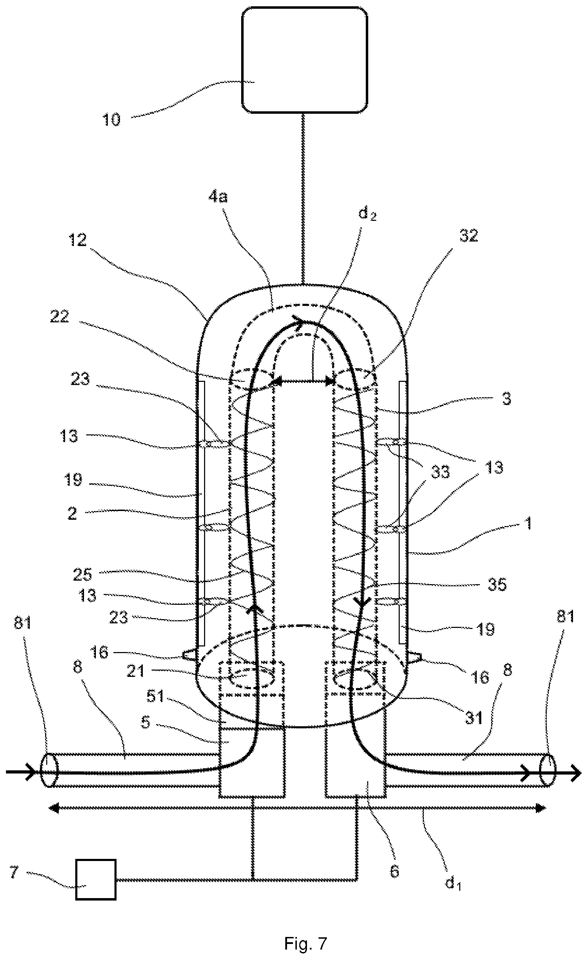

In another embodiment shown in Figs. 7 and 8, the entire upper connecting part 4a is exemplarily arranged inside the common support tube sleeve 1. In yet another unillustrated embodiment, one portion of the upper connecting part 4a is arranged in the common support tube sleeve 1, whereas the other portion of the upper connecting part 4a is arranged outside the common support tube sleeve 1.

In the embodiment shown in Figs. 6, 7 and 8, the air-returning and/or the air-conducting tube 2, 3 in the lower layers of the atmosphere are, for example, provided with at least one end tube extension 8 for separating the air inlet of the lower end 21 of the air-conducting tube 2 from the air outlet of the lower end 31 of the air-returning tube 3, the free end 81 of the end tube extension 8 being located at a horizontal and/or vertical distance from the lower end 11 of the respective tube 2, 3.

In the embodiment shown in Figs. 7 and 8, the common support tube sleeve 1 is coupled to a stabilizing element 10 for stabilization of the upper portion of the common support tube sleeve 1 relative to a selected location on the Earth's surface, such as a balloon, a solar balloon, a stratospheric balloon, a remotely piloted balloon, an airship, etc., wherein the stabilizing element 10 is arranged at a vertical distance above the common support tube sleeve 1 and is filled with the buoyant carrier gas.

In the embodiment illustrated in Figs. 7 and 8, the air-conducting tube 2 and/or the air-returning tube 3 are exemplarily provided along their length with anchor elements 23, 33, e.g., lugs, cables, straps, cords, etc., for anchoring with the anchor elements 13 of the common support tube sleeve 1. Such anchoring prevents the air-conducting tube 2 and/or of the air-returning tube 3 by the pressure of the buoyant gas of the support tube sleeve 1.

In all the described embodiments, the support tube sleeve 1, the air-conducting tube 2 and the air-returning tube 3 are made of a material with low basis weight and high strength, e.g., a polyamide fabric, a polyester fabric, a carbon fibre composite fabric, etc, which is optionally provided with reinforcement 19, 25, 35 (Figure 7), e.g., Kevlar strap, wire spiral, a fibre composite rod or tube, etc.

In the embodiment shown in Figs. 1 and 6, the support tube sleeve 1 is exemplarily provided on its outer surface along at least part of its length with an absorber 15 of the IR component of the solar radiation to heat the wall and the inner surface of the support tube sleeve 1 and to prevent or at least reduce condensation of water vapour on the walls of the tubes 1, 2, 3, e.g., with a black coating, a dark pigment of the tube material, or any other suitable absorber, according to the requirements and the material of the support tube sleeve 1.

The support tube sleeve 1 and/or the air-conducting tube 2 and/or the air-returning tube 3 and/or the upper connecting part 4a are exemplarily provided with a limiter 9 of frost formation on its outer and/or inner surface along at least part of its length (Figs. 1 and 6), for example with a layer of liquid to lower the freezing point of water and/or water-repellent treatment of the surface of the material, etc.

The device according to an embodiment of Fig. 8 exemplarily comprises at least two tube parts 14 of the support tube sleeve 1 to form a compound common support tube sleeve 1, the tube parts 14 being ideally interchangeable with each other. Each of the tube parts 14 of the support tube sleeve 1 with the anchor elements 13 comprises at least one tube part 24 of the air-conducting tube 2 with anchor elements 23 and at least one tube part 34 of the air-returning tube 3 with anchor elements 33. The embodiment of the device with the tube parts 14, 24, 34 facilitates production, assembly, disassembly, repair and servicing of the device.

The device according to the present invention is fluidly connected to a source 18 of the buoyant carrier gas, e.g., hydrogen, helium or any other suitable buoyant carrier gas, as required, each support tube sleeve 1 being provided with at least with one interface 16 for filling and discharging the buoyant carrier gas. In the embodiment shown in Fig. 8, the common support tube sleeve 1 is exemplarily provided with at least two interfaces 16 for filling and discharging the buoyant carrier gas, which are connected to the source 18 of the buoyant carrier gas by inlets 17, e.g., by supply hoses (Fig. 8), by unillustrated supply tubes, etc., which are arranged outside and/or inside the support tube sleeve 1,

In another unillustrated embodiment, the support tube sleeve 1 is provided with three, four, five, six or substantially any number of interfaces 16 for filling and discharging the buoyant carrier gas, which are situated spaced from each other along the length of the support tube sleeve 1 and/or tube parts 14 of the support tube sleeve 1, for increasing/decreasing the buoyancy of the carrier gas along the length of the support tube sleeve 1, as required.

In the embodiment shown in Figs. 7 and 8, the device for cooling the lower layers of the atmosphere is exemplarily coupled to a control system 7 for cooling the lower layers of the atmosphere, which is provided with unillustrated means for receiving and storing operational data from at least one device for cooling the lower layers of the atmosphere and for receiving and storing meteorological data, means for repeated evaluation of this data, e.g., means for machine learning (so-called "artificial intelligence"), and means for controlling at least one device for cooling the lower layers of the atmosphere, e.g., for controlling the interface 16 for filling and discharging the buoyant carrier gas, the air blowing device 5, the air sucking device 6, the air dehumidifier 51, the dispenser 52 and/or the separator 61 of the limiter 9 of frost formation of the stabilizing element 10, the unillustrated closing element of the lower ends 21, 31 the air-conducting tube and/or of the air-returning tube 2, 3 and/or the lower connecting part 4b, etc.

In all the above-described embodiments, the device is used for cooling the lower layers of the atmosphere of the planet Earth, wherein the warm air from the selected collection point in the lower layers of the atmosphere is brought, using the chimney effect and/or the air blowing device 5, through the air-conducting tube 2 to the upper layers of the atmosphere, especially to the upper layers of the troposphere and/or to the stratosphere, where the warm air cools down and at least part of it is brought, through the air-returning tube 3 with the aid of the air sucking device 6 and/or the air blowing device 5, to a selected place in the lower layers of the atmosphere, which is horizontally and/or vertically spaced from the collection point of the warm air.

In an unillustrated example of embodiment, the device in any specific embodiment, according to the invention is provided with at least one service tube which is assigned to an assembly of at least one air-conducting tube 2 and at least one air-returning tube 3 in parallel along at least part of the length, i.e., in the vertical direction, of the air-conducting tube 2 and/or the air-returning tube 3. Preferably, at least one service tube is arranged along the entire length, i.e., in the vertical direction, of at least one air-conducting tube 2 and/or at least one air-returning tube 3. The service tube is adapted for the vertical transport of service technical devices, such as a service robot, and/or at least one service worker with service equipment, all for the replacement and service of individual parts and/or elements of the device, including electrically powered elements of the device, such as sensors, controllers, signal transmitters, etc., along the specified length of the device, or in the vertical direction along the specified height of the device. Preferably, the service tube is designed equivalently as the air-conducting tube 2 and/or the air-returning tube 3, including its incorporation into the support tube sleeve 1 according to the above-described and undescribed examples of embodiment of the invention. The service tube is especially adapted for vertical transport using compressed air, however, other vertical load transport technologies are also generally possible.

The above-mentioned elements of the device, including electrically powered elements of the device, such as sensors, controllers, signal transmitters, etc., are arranged on at least one of the tubes along at least part of the length of the tube.

According to another unillustrated exemplary embodiment, at least one photovoltaic cell of a photovoltaic power plant is assigned to the assembly of at least one air-conducting tube 2 and at least one air-returning tube 3 and any service tube and/or the below-mentioned protective housing, the photovoltaic cell of the photovoltaic power plant being adapted to power at least one electrically powered element of the device or to supply power to a battery. This powered element of the device and/or battery are assigned to at least part of at least one of the tubes.

As is apparent from the combination of the above-described examples of embodiment of the invention, it is within the ordinary skill of the art falling within the scope of the present invention and its protection that, in another unillustrated exemplary embodiment, the service tube and/or carrier tube 1 and/or air-conducting tube 2 and/or air-returning tube 3 is formed along its length by a series of interconnecting tube parts, where each tube part is a self-supporting and self-elevating element of the entire device, ideally the tube parts are interchangeable. The embodiment of a device with tube parts facilitates production, assembly, disassembly, repair, service and also operation of the device.

The device is further provided with means for making the device visible to air traffic detection systems, aircraft, and other means moving in the vicinity of the device, especially for making it visible to radar and for visual visibility. These means for making the device visible exemplarily consist of active elements, such as visual signal transmitters and/or radio transmitters or transmitters of other type "invisible to the human eye" signals, and/or the visibility means consist of passive elements, such as signal reflectors, etc., e.g., also in the form of metal particles, e.g., aluminium, etc., dispersed in the material of which a part of the device is made, etc.

In another unillustrated example of embodiment, the device is arranged inside a protective housing along at least part of the length of the tubes.

In yet another unillustrated example of embodiment, along at least part of the length of one tube and/or of the protective housing, the device is provided with active electrically powered elements adapted to remove possible icing on the outer and/or inner surfaces of at least part of the length of at least one tube and/or the protective housing. These active elements are, for example, formed by surface electric heating elements connected to the above-mentioned at least one photovoltaic cell of the photovoltaic power plant and/or the above-mentioned at least one battery.

### List of references

- 1: support tube sleeve
- 11: lower end
- 12: upper end
- 13: anchor element
- 14: tube part of the support tube sleeve
- 15: absorber of IR component of solar radiation
- 16: interface
- 17: inlet of buoyant gas
- 18: source of buoyant gas
- 19: reinforcement of the support tube sleeve
- 2: the air-conducting tube
- 21: lower end
- 22: upper end
- 23: anchor element
- 24: tube part of the air-conducting tube
- 25: reinforcement of the air-conducting tube
- 3: air-returning tube
- 31: lower end
- 32: upper end
- 33: anchor element
- 34: tube part of the air-returning tube
- 35: reinforcement of the air-returning tube
- 4a: upper connecting part
- 4b: lower connecting part
- 5: air blowing device
- 51: air dehumidifier
- 52: dispenser of the limiter of frost formation
- 6: air sucking device
- 61: separator of the limiter of frost formation
- 7: control system of cooling the lower layers of the atmosphere
- 8: end tube extension
- 81: free end
- 9: limiter of frost formation
- 10: stabilizing element
- d₁: distance of the air inlet into the lower end of the air-conducting tube from the air outlet of the lower end of the air-returning tube
- d₂: distance of the upper ends of the air-conducting tube and the air-returning tube

## Claims

1. A device for cooling the lower layers of the atmosphere which comprises a support tube sleeve (1) filled with a buoyant carrier gas, wherein in the support tube sleeve (1) is arranged in parallel at least one air-conducting tube (2) whose lower end (21) is situated in the lower layers of the atmosphere, especially near the Earth's surface, whereas the upper end (22) of the air-conducting tube (2) is situated in the upper layers of the atmosphere, especially in the upper layers of the troposphere or in the stratosphere, **characterized in that** the air-conducting tube (2) is assigned to at least one air-returning tube (3) whose upper end (32) is assigned to the upper end (22) of the air-conducting tube (2), wherein the lower end (31) of the air-returning tube (3) is spaced from the lower end (21) of the air-conducting tube (2) and the support tube sleeve (1) is provided with an interface (16) for filling and discharging the buoyant carrier gas.

2. The device according to claim 1, **characterized in that** the air-conducting tube (2) and the air-returning tube (3) are at their upper ends (21, 31) interconnected by an upper connecting part (4a).

3. The device according to claim 1 or 2, **characterized in that** the air-conducting tube (2) and the air-returning tube (3) are in the lower layers of the atmosphere interconnected by a lower connecting part (4b).

4. The device according to any of the preceding claims 1 to 3, **characterized in that** the air-conducting tube (2) and the air-returning tube (3) are arranged in a common support tube sleeve (1).

5. The device according to any of the preceding claims 1 to 3, **characterized in that** the air-conducting tube (2) and the air-returning tube (3) are each arranged in its own support tube sleeve (1).

6. The device according to claim 4, **characterized in that** at least part of the upper connecting part (4a) is arranged in the common support tube sleeve (1).

7. The device according to any of the preceding claims 1 to 6, **characterized in that** the air-conducting tube (2) and/or the air-returning tube (3) is in the lower layers of the atmosphere provided with at least one end tube extension (8) whose free end (81) is spaced horizontally and/or vertically from the lower end (21, 31) of the respective tube (2,3).

8. The device according to any of the preceding claims 1 to 7, **characterized in that** the lower end (21) of the air-conducting tube (2) is assigned to a device (5) for blowing air into the air-conducting tube (2), wherein the lower end (31) of the air-returning tube (3) is assigned to an air sucking device (6) for sucking air from the air-returning tube (3).

9. The device according to claim 8, **characterized in that** the air blowing device (5) for blowing air into the air-conducting tube (2) is provided with an air dehumidifier (51).

10. The device according to claim 8, **characterized in that** the device (5) for blowing air into the air-conducting tube (2) and the air sucking device (6) for sucking air from the air-returning tube (3) are coupled to a control system (7) of cooling of the lower layers of the atmosphere which is provided with means for machine learning.

11. The device according to any of the preceding claims 1 to 10, **characterized in that** the air-conducting tube (2) and/or the air-returning tube (3) are along their length provided with anchor elements (23, 33) which are connected to the anchor elements (13) of the support tube sleeve (1).

12. The device according to any of the preceding claims 1 to 11, **characterized in that** the support tube sleeve (1) is provided with an absorber (15) of the infrared component of solar radiation and/or a limiter (9) of frost formation on its outer surface on at least part of its length.

13. The device according to any of the preceding claims 1 to 12, **characterized in that** the air-conducting tube (2) and/or the air-returning tube (3) is along at least part of its length provided with a limiter (9) of frost formation.

14. The device according to any of the preceding claims 1 to 13, **characterized in that** the upper end (12) of the support tube sleeve (1) is coupled to a stabilizing element (10) spaced apart vertically above the support tube sleeve (1) and filled with the buoyant carrier gas.

15. The device according to any of the preceding claims 1 to 14, **characterized in that** the assembly of at least one air-conducting tube (2) and at least one air-returning tube (3) is along at least part of the length assigned in parallel to at least one service tube which is adapted for vertical transport of service technical devices and/or of at least one service worker with service equipment, and/or the assembly of at least one air-conducting tube (2) and at least one air-returning tube (3) is assigned to at least one photovoltaic element of a photovoltaic power plant which is adapted to power at least one electrically powered element or a battery which is assigned to at least part of one of the tubes and/or at least one tube of the entire assembly comprises at least two connected tube parts, each of which is a self-supporting and self-elevating element of the device and/or at least part of the length of the tubes is arranged inside a protective housing and/or the active electrically powered elements along at least part of the length of at least one tube and/or the protective housing are adapted to remove any frost deposition on the outer and/or the inner surfaces along at least part of the length of at least one tube and/or the protective housing.

## Patentansprüche

1. Vorrichtung zum Abkühlen der unteren Atmosphärenschichten, die ein mit einem Auftriebsträgergas gefülltes tragendes Rohr (1) aufweist, wobei im tragenden Rohr (1) mindestens ein Luftführungsrohr (2) parallel angeordnet ist, dessen unteres Ende (21) sich in den unteren Atmosphärenschichten, insbesondere an der Erdoberfläche, befindet, wobei sich das obere Ende (22) des Luftführungsrohrs (2) in den oberen Atmosphärenschichten, insbesondere in den oberen Schichten der Troposphäre oder in der Stratosphäre, befindet, **dadurch gekennzeichnet, dass** dem Luftführungsrohr (2) mindestens ein Luftrückführungsrohr (3) zugeordnet ist, dessen oberes Ende (32) dem oberen Ende (22) des Luftführungsrohrs (2) zugeordnet ist, wobei das untere Ende (31) des Luftrückführungsrohrs (3) vom unteren Ende (21) des Luftführungsrohrs (2) beabstandet ist und das tragende Rohr (1) eine Schnittstelle (16) zum Befüllen und Entleeren des Auftriebsträgergases aufweist.

2. Vorrichtung nach dem Anspruch 1, **dadurch gekennzeichnet, dass** das Luftführungsrohr (2) und das Luftrückführungsrohr (3) an ihren oberen Enden (21, 31) durch ein oberes Verbindungselement (4a) verbunden sind.

3. Vorrichtung nach dem Anspruch 1 oder 2, **dadurch gekennzeichnet, dass** das Luftführungsrohr (2) und das Luftrückführungsrohr (3) in den unteren Atmosphärenschichten durch ein unteres Verbindungselement (4b) verbunden sind.

4. Vorrichtung nach einem der vorangehenden Ansprüche 1 bis 3, **dadurch gekennzeichnet, dass** das Luftführungsrohr (2) und das Luftrückführungsrohr (3) in einem gemeinsamen tragenden Rohr (1) angeordnet sind.

5. Vorrichtung nach einem der vorangehenden Ansprüche 1 bis 3, **dadurch gekennzeichnet, dass** das Luftführungsrohr (2) und das Luftrückführungsrohr (3) jeweils in ihrem eigenen tragenden Rohr (1) angeordnet sind.

6. Vorrichtung nach dem Anspruch 4, **dadurch gekennzeichnet, dass** mindestens ein Teil des oberen Verbindungselements (4a) in einem gemeinsamen tragenden Rohr (1) angeordnet ist.

7. Vorrichtung nach einem der vorangehenden Ansprüche 1 bis 6, **dadurch gekennzeichnet, dass** das Luftführungsrohr (2) und/oder das Luftrückführungsrohr (3) in den unteren Atmosphärenschichten mindestens einen Endrohraufsatz (8) aufweist, dessen freies Ende (81) sich in einem horizontalen und/oder vertikalen Abstand vom unteren Ende (21, 31) des jeweiligen Rohrs (2, 3) befindet.

8. Vorrichtung nach einem der vorangehenden Ansprüche 1 bis 7, **dadurch gekennzeichnet, dass** dem unteren Ende (21) des Luftführungsrohrs (2) eine Vorrichtung (5) zum Einblasen der Luft in das Luftführungsrohr (2) zugeordnet ist, wobei dem unteren Ende (31) des Luftrückführungsrohrs (3) eine Vorrichtung (6) zum Saugen der Luft aus dem Luftrückführungsrohr (3) zugeordnet ist.

9. Vorrichtung nach dem Anspruch 8, **dadurch gekennzeichnet, dass** die Vorrichtung (5) zum Einblasen der Luft in das Luftführungsrohr (2) einen Luftentfeuchter (51) aufweist.

10. Vorrichtung nach dem Anspruch 8, **dadurch gekennzeichnet, dass** die Vorrichtung (5) zum Einblasen der Luft in das Luftführungsrohr (2) und die Vorrichtung (6) zum Saugen der Luft aus dem Luftrückführungsrohr (3) mit einem System (7) zur Steuerung der Abkühlung der unteren Atmosphärenschichten verbunden sind, das die Mittel zum maschinellen Lernen aufweist.

11. Vorrichtung nach einem der vorangehenden Ansprüche 1 bis 10, **dadurch gekennzeichnet, dass** das Luftführungsrohr (2) und/oder das Luftrückführungsrohr (3) entlang ihrer Länge die Verankerungselemente (23, 33) aufweisen, die mit den Verankerungselementen (13) des tragenden Rohrs (1) verbunden sind.

12. Vorrichtung nach einem der vorangehenden Ansprüche 1 bis 11, **dadurch gekennzeichnet, dass** das tragende Rohr (1) an seiner Außenfläche auf mindestens einem Teil seiner Länge einen Absorber (15) der Infrarotkomponente der Sonnenstrahlung und/oder einen Begrenzer (9) der Eisbildung aufweist.

13. Vorrichtung nach einem der vorangehenden Ansprüche 1 bis 12, **dadurch gekennzeichnet, dass** das Luftführungsrohr (2) und/oder das Luftrückführungsrohr (3) auf mindestens einem Teil seiner Länge einen Begrenzer (9) der Eisbildung aufweist.

14. Vorrichtung nach einem der vorangehenden Ansprüche 1 bis 13, **dadurch gekennzeichnet, dass** das obere Ende (12) des tragenden Rohrs (1) mit einem Stabilisierungselement (10) verbunden ist, das in einem vertikalen Abstand oberhalb des tragenden Rohrs (1) angeordnet und mit einem Auftriebsträgergas gefüllt ist.

15. Vorrichtung nach einem der vorangehenden Ansprüche 1 bis 14, **dadurch gekennzeichnet, dass** der Anordnung mindestens eines Luftführungsrohrs (2) und mindestens eines Luftrückführungsrohrs (3) auf mindestens einem Teil der Länge parallel laufend mindestens ein Servicerohr zugeordnet ist, das für den vertikalen Transport der Servicetechnik und/oder mindestens eines Servicetechnikers mit einer Serviceausrüstung angepasst ist, und/oder der Anordnung mindestens eines Luftführungsrohrs (2) und mindestens eines Luftrückführungsrohrs (3) mindestens eine Photovoltaikzelle einer Photovoltaikanlage zugeordnet ist, die zur Stromversorgung mindestens eines elektrisch zu speisenden Elements oder einer Batterie angepasst ist, die mindestens einem Teil eines der Rohre zugeordnet ist, und/oder mindestens ein Rohr der gesamten Anordnung mindestens zwei miteinander verbundene Rohrabschnitte aufweist, von denen jeder ein selbsttragendes sowie selbstauftreibendes Element der Vorrichtung ist, und/oder mindestens ein Teil der Länge der Rohre innerhalb einer Schutzhülle angeordnet ist, und/oder auf mindestens einem Teil der Länge mindestens eines Rohrs und/oder der Schutzhülle elektrisch zu speisende Elemente aktiv sind, die zum Entfernen eines eventuellen Eises auf den Außen- und/oder auch Innenflächen mindestens eines Teils der Länge mindestens eines Rohrs und/oder der Schutzhülle angepasst sind.

## Revendications

1. Dispositif de refroidissement de couches inférieures de l'atmosphère, qui comprend un tube porteur (1) rempli de gaz vecteur de sustentation, dans lequel au moins un tube conducteur d'air (2) est disposé parallèlement dans le tube porteur (1) dont l'extrémité inférieure (21) est située dans les couches inférieures de l'atmosphère, en particulier près de la surface de la Terre, tandis que l'extrémité supérieure (22) du tube conducteur d'air (2) est située dans les couches supérieures de l'atmosphère, en particulier dans les couches supérieures de la troposphère ou dans la stratosphère, **caractérisé en ce que** le tube conducteur d'air (2) est 'associé à au moins un tube de retour d'air (3) dont l'extrémité supérieure (32) est associée à l'extrémité supérieure (22) du tube conducteur d'air (2), tandis que l'extrémité inférieure (31) du tube de retour d'air (3) est éloignée de l'extrémité inférieure (21) du tube conducteur d'air (2) et le tube porteur (1) est pourvu d'une interface (16) pour le remplissage et la purge du gaz vecteur de sustentation.

2. Dispositif selon la revendication 1, **caractérisé en ce que** le tube conducteur d'air (2) et le tube de retour d'air (3) sont reliés entre eux à leurs extrémités supérieures (21, 31) par une pièce de raccordement supérieure (4a).

3. Dispositif selon la revendication 1 ou 2, **caractérisé en ce que** le tube conducteur d'air (2) et le tube de retour d'air (3) sont reliés entre eux dans les couches inférieures de l'atmosphère par une pièce de raccordement inférieure (4b).

4. Dispositif selon l'une des revendications de 1 à 3 précédentes, **caractérisé en ce que** le tube conducteur d'air (2) et le tube de retour d'air (3) sont disposés dans un tube porteur commun (1).

5. Dispositif selon l'une des revendications de 1 à 3 précédentes, **caractérisé en ce que** le tube conducteur d'air (2) et le tube de retour d'air (3) sont disposés chacun dans leur propre tube porteur (1).

6. Dispositif selon la revendication 4, **caractérisé en ce qu'**au moins une partie de la pièce de raccordement supérieure (4a) est disposée dans un tube porteur commun (1).

7. Dispositif selon l'une des revendications de 1 à 6 précédentes, **caractérisé en ce que** le tube conducteur d'air (2) et/ou le tube de retour d'air (3) est pourvu, dans les couches inférieures de l'atmosphère, d'au moins un raccord tubulaire d'extrémité (8) dont l'extrémité libre (81) est éloignée horizontalement et/ou verticalement de l'extrémité inférieure (21, 31) du tube respectif (2, 3).

8. Dispositif selon l'une des revendications de 1 à 7 précédentes, **caractérisé en ce que** l'extrémité inférieure (21) du tube conducteur d'air (2) est associée à un dispositif (5) destiné à souffler de l'air dans le tube conducteur d'air (2), tandis que l'extrémité inférieure (31) du tube de retour d'air (3) est associée à un dispositif d'aspiration d'air (6) destiné à aspirer l'air du tube de retour d'air (3).

9. Dispositif selon la revendication 8, **caractérisé en ce que** le dispositif (5) destiné à souffler de l'air dans le tube conducteur d'air (2) est pourvu d'un déshumidificateur d'air (51).

10. Dispositif selon la revendication 8, **caractérisé en ce que** le dispositif (5) destiné à souffler de l'air dans le tube conducteur d'air (2) et le dispositif (6) d'aspiration d'air du tube de retour d'air (3) sont couplés à un système (7) de contrôle de refroidissement des couches inférieures de l'atmosphère, qui est pourvu de moyens d'apprentissage automatique.

11. Dispositif selon l'une des revendications 1 à 10 précédentes, **caractérisé en ce que** le tube conducteur d'air (2) et/ou le tube de retour d'air (3) sont pourvus sur leur longueur d'éléments d'ancrage (23, 33) qui sont reliés aux éléments d'ancrage (13) du tube porteur (1).

12. Dispositif selon l'une des revendications de 1 à 11 précédentes, **caractérisé en ce que** le tube porteur (1) est pourvu, sur sa surface extérieure, sur au moins une partie de sa longueur, d'un absorbeur (15) de la composante infrarouge du rayonnement solaire et/ou d'un limiteur (9) de formation de givre.

13. Dispositif selon l'une des revendications 1 à 12 précédentes, **caractérisé en ce que** le tube conducteur d'air (2) et/ou le tube de retour d'air (3) est pourvu, sur au moins une partie de sa longueur, d'un limiteur (9) de formation de givre.

14. Dispositif selon l'une des revendications de 1 à 13 précédentes, **caractérisé en ce que** l'extrémité supérieure (12) du tube porteur (1) est couplée à un élément stabilisateur (10) disposé verticalement au-dessus du tube porteur (1) et rempli de gaz vecteur de sustentation.

15. Dispositif selon l'une des revendications de 1 à 14 précédentes, **caractérisé en ce que** l'ensemble d'au moins un tube conducteur d'air (2) et d'au moins un tube de retour d'air (3) est associé, sur au moins une partie de sa longueur, à au moins un tube de service qui est adapté au transport vertical de matériel technique de service et/ou d'au moins un technicien de service avec son équipement de service, et/ou l'ensemble d'au moins un tube conducteur d'air (2) et d'au moins un tube de retour d'air (3) est associé à au moins un élément photovoltaïque d'une centrale photovoltaïque, qui est adapté pour alimenter au moins un élément électrique ou une batterie associée à au moins une partie de l'un des tubes et/ou au moins un tube de l'ensemble complet comprend au moins deux parties du tube reliées entre elles, chacune d'entre elles étant un élément autoportant et auto-élévateur du dispositif et/ou au moins une partie de la longueur des tubes est disposée à l'intérieur d'un boîtier de protection et/ou au moins une partie de la longueur d'au moins un tube et/ou d'un boîtier protecteur comporte des éléments actifs alimentés électriquement, adaptés pour éliminer tout dépôt de givre sur les surfaces extérieures et/ou intérieures d'au moins une partie de la longueur d'au moins un tube et/ou du boîtier de protection.
